# EUROPÄISCHE PATENTSCHRIFT

(11) **EP 1 371 125 B1**
(45) Veröffentlichungstag und Bekanntmachung des Hinweises auf die Patenterteilung: **08.02.2006**
(21) Anmeldenummer: 02702682.2
(22) Anmeldetag: 15.03.2002
(51) Int. Cl.: H02K 15/10, H02K 3/34

(54) **VERFAHREN ZUM HERSTELLEN EINES LEITERSTABES**
METHOD FOR PRODUCING A BAR-SHAPED CONDUCTOR
PROCEDE DE PRODUCTION D'UNE BARRE CONDUCTRICE

(30) Priorität: 16.03.2001 DE 10113299
(43) Veröffentlichungstag der Anmeldung: 17.12.2003
(73) Patentinhaber: Alstom Technology Ltd, 5400 Baden (CH)
(72) Erfinder: BAUMANN, Thomas, CH-5430 Wettingen (CH); KLAMT, Thomas, CH-5107 Schinznach-Dorf (CH); NIENBURG, Hans-Christoph, 69121 Heidelberg (DE)
(86) Internationale Anmeldenummer: PCT/IB2002/000793
(87) Internationale Veröffentlichungsnummer: WO 2002/075903

(56) Entgegenhaltungen:
- WO-A-97/43816
- FR-A- 2 230 110
- GB-A- 1 142 197
- US-A- 4 109 375
- US-A- 5 650 031

## Beschreibung

### Technisches Gebiet

Die Erfindung betrifft ein Verfahren zum Herstellen eines aus mehreren, gegeneinander elektrisch isolierten Teilleitern bestehenden, elektrisch leitenden Leiterstabes. Derartige Leiterstäbe können beispielsweise als Statorleiter in rotierenden elektrischen Maschinen, z.B. Generatoren, oder in Transformatoren verwendet werden. Leiterstäbe, deren Teilleiter auf bestimmte Art gegeneinander verdrillt sind, werden auch als "Roebelstäbe" bezeichnet. Im Unterschied zu Stahlseilen, die aus einer Vielzahl von Stahldrähten mit Kreisquerschnitt oder Sechseckquerschnitt aufgebaut sind, besitzen die Teilleiter eines solchen Leiterstabes meistens einen Rechteckquerschnitt.

### Stand der Technik

Um beispielsweise in einer rotierenden elektrischen Maschine die elektrischen Verluste zu reduzieren, sind die Teilleiter der darin verwendeten Statorleiter gegeneinander isoliert und gegeneinander verdrillt. Dies erfordert eine dreidimensionale Biegeverformung jedes einzelnen Teilleiters. Eine spezielle Biegeverformung oder Verdrillung der einzelnen Teilleiter wird auch als Verröbelung bezeichnet, so dass der daraus gebildete Leiterstab auch als Roebelstab bezeichnet werden kann. Derartige Leiterstäbe oder Roebelstäbe können als Statorleiter für eine rotierende elektrische Maschine, z. B. für einen Generator, oder für einen Transformator ausgebildet sein. Üblicherweise besitzen die Teilleiter eines solchen Leiterstabes einen rechteckigen Querschnitt.

Ein herkömmliches Verfahren zum Herstellen solcher Leiterstäbe weist die folgenden Schritte auf:
1. Herstellen eines Endlosdrahtes mit dem für die Teilleiter gewünschten Querschnitt,
2. Aufbringen einer elektrischen Isolierung auf den Endlosdraht,
3. Herstellen der Teilleiter aus dem isolierten Endlosdraht durch Ablängen des Endlosdrahtes auf Teilleiterlänge,
4. Abisolieren der Teilleiterenden, was für die Ausbildung elektrischer Anschlüsse am fertigen Leiterstab erforderlich ist,
5. Biegeverformen, insbesondere Kröpfen, der Teilleiter,
6. Zusammenbau mehrerer biegeverformter Teilleiter zu einem Leiterstab,
7. Biegen des zusammengebauten Leiterstabes und Verkleben der Teilleiter des zusammengebauten Leiterstabes.

Bei Leiterstäben, die auf herkömmliche Weise hergestellt sind, ist die Dicke der elektrischen Isolierungen, mit denen die Teilleiter des Leiterstabes versehen sind, bezüglich ihrer elektrisch isolierenden Wirkung stark überdimensioniert. Dies ist darauf zurückzuführen, dass im Rahmen der Herstellung des Leiterstabes die isolierten Teilleiter bei ihrer Biegeverformung, insbesondere beim Kröpfen, relativ hohen mechanischen Belastungen ausgesetzt sind. Damit die Isolierung der Teilleiter hierbei nicht zerstört wird bzw. damit bei Beschädigung der Isolierung ein genügender Abstand zwischen den Teilleitern gewährleistet werden kann, muss diese eine gewisse Mindestdicke aufweisen bzw. müssen die Teilleiter zusätzlich z.B. mit Glasfasern umsponnen werden. Die für die Herstellung der Leiterstäbe erforderliche Dicke der Teilleiterisolierungen ist dadurch erheblich größer als eine Isolierdicke, die eine hinreichende elektrische Isolierung der Teilleiter gegeneinander gewährleistet. Darüber hinaus können bestimmte Biegeverformungen der Teilleiter, die auch als "Verroebelungen" bezeichnet werden und zur Reduzierung von Verlusten wünschenswert sind, nicht realisiert werden, da die Isolierung der Teilleiter aufgrund großer Biegewinkel, insbesondere Kröpfwinkel, und/oder aufgrund großer Breiten/Höhenverhältnisse der Teilleiterquerschnitte dabei ganz oder teilweise zerstört wird.

Das Dokument US-4 109 375 beschreibt einen Leiter mit einer Isolierung und einer auf einer Seite des Leiters angeordnete Klebschicht, der auf einem Träger zu einer Spule gewickelt wird. Es ist diesbezüglich weiter vorgesehen, die Spule zu erwärmen, damit die Klebschicht die Leiter untereinander verbindet.

Das Dokument GB-1 142 197 beschreibt einen vorgebogenen Leiterstab für eine elektrische Maschine, der mit einer Isolierung beschichtet wird. Diese vorbekannte Verfahren sieht nicht vor, dass die so vorgefertigten Leiterstäbe miteinander gebündelt werden.

### Darstellung der Erfindung

Die vorliegende Erfindung beschäftigt sich mit dem Problem, für einen aus mehreren Teilleitern aufgebauten Leiterstab ein Herstellungsverfahren anzugeben, das einerseits eine Reduktion der Isolierdicke der Teilleiter ermöglicht und andererseits die Realisierung relativ beliebiger Biegeverformungen der Teilleiter gewährleistet.

Erfindungsgemäß wird dieses Problem durch ein Verfahren mit den Merkmalen des Anspruchs 1 gelöst.

Die Erfindung beruht auf dem allgemeinen Gedanken, zur Herstellung der Teilleiter zunächst einen unisolierten Endlosdraht zu verwenden, diesen in der gewünschten Weise zu verformen und erst im Anschluss daran die Isolierung am verformten Leiterstab anzubringen. Durch die erfindungsgemäße Verfahrensweise ist es möglich, die Teilleiter-Isolierung unabhängig von der Biegeverformung der Teilleiter zu dimensionieren, wodurch erheblich kleinere Isolierdicken erzielbar sind. Da außerdem die Isolierung erst nach der Biegeverformung der Teilstäbe aufgebracht wird, können für die Teilstäbe relativ beliebige Biegeverformungen, insbesondere Verroebelungen, mit extremen Biegewinkeln, insbesondere Kröpfwinkeln, durchgeführt werden. Darüber hinaus sind dabei beliebige Breiten/Höhenverhältnisse für die Teilleiterquerschnitte möglich. Hierdurch ergeben sich neue Gestaltungsmöglichkeiten für die Leiterstäbe, wodurch zusätzliche Leistungssteigerungen bei den Transformatoren oder bei den rotierenden elektrischen Maschinen möglich sind, in denen die Leiterstäbe zum Einsatz kommen.

Eine Reduzierung der Isolationsdicke kann z.B. dazu verwendet werden, bei gleichem Gesamtquerschnitt für den Leiterstab Teilleiter mit höherem leitenden Leitungsquerschnitt zu verwenden, wodurch der Strombelag des Leiterstabes erhöht werden kann. Auch dies kann zu einer Leistungssteigerung der jeweiligen Maschine verwendet werden, die derartige Leiterstäbe enthält. Alternativ kann die Reduktion der Isolierungsdicke der Teilleiter auch zu einer Reduktion des Gesamtquerschnitts des Leiterstabs verwendet werden, ohne dabei die Leistung der damit ausgestatteten Maschine zu beeinträchtigen. Ein weiterer Vorteil einer reduzierten Teilleiterisolation kann darin gesehen werden, dass dadurch der Wärmeübergang zwischen den Teilleiter verbessert wird. Dies ist dann wichtig, wenn sich die Teilleiter des Leiterstabes aufgrund unterschiedlicher Verluste verschieden erwärmen. Durch den verbesserten Wärmeübergang zwischen den Teilleitern können diese unterschiedlichen Temperaturen zumindest teilweise wieder ausgeglichen werden.

Bei einer besonders vorteilhaften Ausführungsform wird das Aufbringen der elektrischen Isolierung auf die zuvor biegeverformten Teilleiter so durchgeführt, dass die Enden der Teilleiter unisoliert bleiben. Bei dieser Vorgehensweise kann im Vergleich zu einem herkömmlichen Herstellungsverfahren ein zusätzlicher Verfahrensschritt, nämlich das Abisolieren der Teilleiterenden, entfallen. Das Herstellungsverfahren kann somit preiswerter durchgeführt werden.

Zweckmäßig können die Enden der biegeverformten Teileiter beim Aufbringen der elektrischen Isolierung als Angriffsstelle für eine Halterung einer Isoliervorrichtung verwendet werden. Beispielsweise müssen die Teilleiter für die Anbringung der Isolierung in einer Isoliervorrichtung von Halterungen gehaltert werden, um beispielsweise eine Beschichtung durchzuführen.

Bei einer Weiterbildung des erfindungsgemäßen Verfahrens kann das Aufbringen der Isolierung zwei Teilschritte umfassen, nämlich einen ersten Teilschritt, bei dem der biegeverformte Teilleiter mit einem Kunststoffpulver beschichtet wird, sowie einen zweiten Teilschritt, bei dem diese Pulverschicht gesintert wird, wobei es zu einem Verschmelzen und/oder Vernetzen des Kunststoffs unter Ausbildung einer Isolierschicht kommt. Diese zweiteilige Vorgehensweise ist von Vorteil, da das Anbringen der Pulverschicht in einer dafür optimierten Vorrichtung, z. B. bei Umgebungstemperatur, durchführbar ist, während das Sintern der Pulverschicht zur Ausbildung der Isolierschicht in einer separaten, speziell dafür optimierten Vorrichtung erfolgt.

Für bestimmte Isolierungen kann es vorteilhaft sein, mehrere Isolierschichten aufzubringen. Insbesondere ist es möglich, auf eine Isolierschicht eine Schicht aus einem Duroplast aufzubringen, derart, dass diese Duroplastschicht nicht oder nur teilweise vernetzt wird. Dadurch ergibt sich die Möglichkeit, das Verkleben der Teilleiter des zusammengebauten Leiterstabes durch die Vernetzung der Duroplastschichten der Teilleiter durchzuführen. Auch hier vereinfacht sich die Herstellung der Leiterstäbe, da die Anbringung zusätzlicher Klebstoffe, wie z. B. eine Prepreg-Vliesauflage, entfallen kann.

Weitere wichtige Merkmale und Vorteile des erfindungsgemäßen Verfahrens ergeben sich aus den Unteransprüchen und aus der nachfolgenden Beschreibung bevorzugter Ausführungsbeispiele der Erfindung.

### Wege zur Ausführung der Erfindung

Für die Herstellung eines Leiterstabes nach dem erfindungsgemäßen Verfahren wird ein unisolierter Endlosdraht verwendet, der den Querschnitt der herzustellenden Teilleiter besitzt und aus einem elektrisch leitenden Material, z.B. Kupfer, besteht. Aus diesem Endlosdraht werden dann durch Ablängen des Endlosdrahtes auf Teilleiterlänge unverformte Teilleiter hergestellt. Nach dem Ablängen werden die Teilleiter biegeverformt, insbesondere abgekröpft, um die gewünschte dreidimensionale Form für die Teilleiter zu erzielen. Entsprechend dem Kerngedanken der vorliegenden Erfindung wird erst nach dem Biegeverformen der Teilleiter eine elektrische Isolierung auf die biegeverformten Teilleiter aufgebracht. Nach dem Aufbringen der Isolierung kann dann aus mehreren biegeverformten und isolierten Teilleitern ein Leiterstab zusammengebaut werden. Der so zusammengebaute Leiterstab kann dann nochmals einer Biegeverformung unterworfen werden. Danach erfolgt das Verkleben der Teilleiter des zusammengebauten Leiterstabes, wodurch dieser seine Formstabilität erhält.

Das Aufbringen der elektrischen Isolierung auf die Teilleiter wird vorzugsweise so ausgeführt, dass die Enden der Teilleiter unisoliert bleiben. Ein nachträgliches Abisolieren der Teilleiterenden entfällt somit. Um die Teilleiterenden beim Anbringen der Isolierung unisoliert zu lassen, können diese z.B. als Angriffsstellen für eine Halterung einer Isoliervorrichtung verwendet werden. Beispielsweise werden die Teilleiter an ihren Enden in einer Isoliervorrichtung so gehaltert, dass die Teilleiter zwischen ihren Enden frei schweben. Ebenso können die Teilleiter an ihren Enden gehalten werden, um sie durch eine Beschichtungskammer durchzuziehen.

Die Isolierung der Teilleiter kann beispielsweise durch einen Pulver-Beschichtungsprozess erreicht werden. Als Beschichtungspulver können grundsätzlich alle gefüllten oder ungefüllten Polymere verwendet werden, sofern sie den thermischen Anforderungen genügen, die beim jeweiligen Leiterstab auftreten. Beispiele für thermisch geeignete thermoplastische Kunststoffe sind PEN, PPS, PEEK, PI, PAI und PES. Darüber hinaus eignen sich auch Fluorkunststoffe. Beispiele für thermisch geeignete Duroplaste bzw. Elastomere sind Epoxid- und Silikonharze sowie Epoxy/Silikon-Mischsysteme. Um die mechanischen Eigenschaften der Isolierung zu verbessern, beispielsweise um den thermischen Ausdehnungskoeffizienten zu reduzieren oder um das Fliessen des Kunststoffes bei hohen Temperaturen und hohen Belastungen zu reduzieren, können diesen Kunststoffen anorganische Füllstoffe, z.B. in Konzentrationen von 10% - 80%, beigemischt werden.

Vorzugsweise wird das eigentliche Beschichtungsverfahren in zwei Teilschritte untergliedert.

In einem ersten Teilschritt wird insbesondere bei Raumtemperatur auf den bereits biegeverformten Teilleiter eine Schicht aus Kunststoffpulver aufgebracht. Dies geschieht z.B. in elektrostatischen Wirbelbettkammern oder in elektrostatischen Sprühkammern, die kleiner sein können als der zu beschichtende Teilleiter. Eine solche Beschichtungskammer weist an gegenüberliegenden Seiten Öffnungen auf, durch die die zu beschichtenden, biegeverformten Teilleiter einzeln oder zu mehreren gleichzeitig durch die Kammer hindurchgezogen werden. Die Auftragsmenge des Kunststoffpulvers und somit die erzielbare Schichtdicke sind z. B. über den Vorschub und/oder über die Konzentration des zerstäubten Pulvers regelbar, mit dem der oder die Teilleiter durch die Kammer hindurchgezogen werden. Damit das Kunststoffpulver auf der Oberfläche der Teilleiter haften bleibt, wird es für den Beschichtungsvorgang elektrostatisch aufgeladen.

In einem zweiten Teilschritt wird die aufgebrachte Pulverschicht in einer getrennten Sinterkammer gesintert, wobei das Kunststoffpulver aufschmilzt bzw. verschmilzt. Bei Duroplasten kommt es dann außerdem zu einer thermischen Vernetzung des Kunststoffs. Durch das Sintern mit Verschmelzen und/oder Vernetzen wird eine Isolierschicht ausgebildet, die einen geschlossenen und homogenen Film bildet. Auch dieser zweite Teilschritt kann in einem Durchlaufverfahren durchgeführt werden, wobei z. B. eine optische oder elektrische oder induktive Heizung vorgesehen sein kann.

Bei einer bevorzugten Ausführungsform des erfindungsgemäßen Verfahrens kann die Isolierung der Teilleiter aus mehreren Isolierschichten aufgebaut sein. Bei einer speziellen Ausführungsform kann auf eine oder mehrere dieser Isolierschichten aus thermoplastischem oder duroplastischem Kunststoff, die bereits vollständig gesintert bzw. vernetzt sind, eine zusätzliche Schicht aus einem Duroplast aufgebracht werden. Dabei wird der Sinterprozess so gesteuert, dass diese letzte Duroplastschicht nicht oder nur teilweise vernetzt wird. Der Vemetzungsgrad kann beispielsweise über die Temperatur und über die Dauer der Temperaturbehandlung gesteuert werden. Durch diese Vorgehensweise ist diese äußere Duroplastschicht thermisch noch reaktiv. Wenn nun ein Leiterstab aus mehreren Teilleitern zusammengebaut wird, die jeweils eine äußere, reaktive Durcplastschicht aufweisen, kann das Verkleben der Teilleiter des zusammengebauten und ggf. biegeverformten Leiterstabes besonders einfach durchgeführt werden, indem durch eine entsprechende Nachbehandlung die nunmehr aneinandergrenzenden Duroplastschichten miteinander vernetzt werden.

## Patentansprüche

1. Verfahren zum Herstellen eines aus mehreren, gegeneinander elektrisch isolierten Teilleitern bestehenden, elektrisch leitenden Leiterstabes, mit folgenden Schritten:
A: Herstellen von Teilleitern aus einem elektrisch leitenden, nicht isolierten Endlosdraht durch Ablängen des Endlosdrahtes auf Teilleiterlänge,
B: Biegeverformen der Teilleiter,
C: Aufbringen einer elektrischen Isolierung auf die biegeverformten Teilleiter,
D: Zusammenbauen mehrerer biegeverformter isolierter Teilleiter zu einem Leiterstab,
E: Biegen des zusammengebauten Leiterstabes und/oder anschliessendes Verkleben der Teilleiter des zusammengebauten Leiterstabes.

2. Verfahren nach Anspruch 1, **dadurch gekennzeichnet, dass** Schritt C so durchgeführt wird, dass die Enden der Teilleiter unisoliert bleiben.

3. Verfahren nach Anspruch 2, **dadurch gekennzeichnet, dass** die Enden der biegeverformten Teilleiter in Schritt C als Angriffsstelle für eine Halterung einer Isoliervorrichtung verwendet werden.

4. Verfahren nach einem der Ansprüche 1 bis 3, **dadurch gekennzeichnet, dass** Schritt C folgende Teilschritte umfasst:
C1: Pulver-Beschichten des biegeverformten Teilleiters mit einem Kunststoffpulver,
C2: Sintern der Pulverschicht mit Verschmelzen und/oder Vernetzen des Kunststoffs zu einer Isolierschicht.

5. Verfahren nach einem der Ansprüche 1 bis 4, **dadurch gekennzeichnet, dass** in Schritt C mehrere Isolierschichten aufgebracht werden.

6. Verfahren nach einem der Ansprüche 1 bis 5, **dadurch gekennzeichnet, dass** in Schritt C auf eine Isolierschicht eine Schicht aus einem Duroplast aufgebracht wird, derart, dass diese Duroplastschicht nicht oder nur teilweise vernetzt wird, wobei in Schritt E das Verkleben der Teilleiter des zusammengebauten Leiterstabes durch die Vernetzung dieser Duroplastschichten der Teilleiter erfolgt.

7. Verfahren nach Anspruch 6, **dadurch gekennzeichnet, dass** das Duroplast ein Epoxidharz oder ein Epoxidharz/Silikonharz-Mischsystem ist.

8. Verfahren zumindest nach Anspruch 4, **dadurch gekennzeichnet, dass** das Kunststoffpulver für Schritt C1 elektrostatisch aufgeladen wird.

9. Verfahren nach einem der Ansprüche 1 bis 8, **dadurch gekennzeichnet, dass** der Leiterstab als Roebelstab ausgebildet ist.

10. Verfahren nach einem der Ansprüche 1 bis 9, **dadurch gekennzeichnet, dass** der Leiterstab als Statorleiter für eine rotierende elektrische Maschine, insbesondere Generator, oder für einen Transformator ausgebildet ist.

11. Verfahren nach einen der Ansprüche 1 bis 10, **dadurch gekennzeichnet, dass** die Teilleiter einen rechteckigen Querschnitt aufweisen.

## Claims

1. Process for manufacturing an electrically conducting conductor bar comprising a number of partial conductors electrically insulated from one another, with the following steps:
A: manufacturing partial conductors from an electrically conducting, not insulated endless wire by cutting the endless wire to length, to the length of the partial conductors,
B: deforming the partial conductors by bending,
C: applying an electrical insulation to the bent partial conductors,
D: assembling a number of bent insulated partial conductors to form a conductor bar,
E: bending the assembled conductor bar and/or subsequent adhesively bonding the partial conductors of the assembled conductor bar.

2. Process according to Claim 1, **characterized in that** step C is carried out in such a way that the ends of the partial conductors remain uninsulated.

3. Process according to Claim 2, **characterized in that** the ends of the bent partial conductors are used in step C as engagement points for a securing means of an insulating apparatus.

4. Process according to one of Claims 1 to 3, **characterized in that** step C comprises the following substeps:
C1: powder-coating the bent partial conductor with a plastics powder,
C2: sintering the powder layer with fusing and/or crosslinking of the plastic to form an insulating layer.

5. Process according to one of Claims 1 to 4, **characterized in that** in step C a number of insulating layers are applied.

6. Process according to one of Claims 1 to 5, **characterized in that** in step C a layer of a thermosetting material is applied to an insulating layer in such a way that this layer of thermosetting material is not crosslinked or is crosslinked only partially, the adhesive bonding of the partial conductors of the assembled conductor bar being performed in step E by the crosslinking of these layers of thermosetting material of the partial conductors.

7. Process according to Claim 6, **characterized in that** the thermosetting material is an epoxy resin or a mixed epoxy resin/silicone resin system.

8. Process at least according to Claim 4, **characterized in that** the plastics powder is electrostatically charged for step C1.

9. Process according to one of Claims 1 to 8, **characterized in that** the conductor bar is designed as a Roebel bar.

10. Process according to one of Claims 1 to 9, **characterized in that** the conductor bar is designed as a stator conductor for a rotating electrical machine, in particular a generator, or for a transformer.

11. Process according to one of Claims 1 to 10, **characterized in that** the partial conductors have a rectangular cross section.

## Revendications

1. Procédé de production d'une barre conductrice électriquement conductrice, se composant de plusieurs conducteurs partiels électriquement isolés les uns des autres, comprenant les étapes suivantes:
A: Produire des conducteurs partiels à partir d'un fil sans fin électriquement conducteur, non isolé, en coupant le fil sans fin à la longueur des conducteurs partiels,
B: Déformer par flexion les conducteurs partiels,
C: Déposer une isolation électrique sur les conducteurs partiels déformés par flexion,
D: Réunir plusieurs conducteurs partiels isolés, déformés par flexion, en une barre conductrice,
E: Cintrer la barre conductrice composée et/ou coller ensuite les conducteurs partiels de la barre conductrice composée.

2. Procédé selon la revendication 1, **caractérisé en ce que** l'étape C est exécutée de telle façon que les extrémités des conducteurs partiels restent sans isolation.

3. Procédé selon la revendication 2, **caractérisé en ce que** les extrémités des conducteurs partiels déformés par flexion sont utilisées à l'étape C comme points d'attache pour un support d'un dispositif d'isolation.

4. Procédé selon l'une quelconque des revendications 1 à 3, **caractérisé en ce que** l'étape C comprend les étapes partielles suivantes:
C1: Revêtir de poudre le conducteur partiel déformé par flexion avec une poudre de plastique,
C2: Fritter la couche de poudre avec fusion et/ou réticulation du plastique en une couche isolante.

5. Procédé selon l'une quelconque des revendications 1 à 4, **caractérisé en ce que** plusieurs couches isolantes sont déposées à l'étape C.

6. Procédé selon l'une quelconque des revendications 1 à 5, **caractérisé en ce que** l'on dépose, à l'étape C, une couche en duroplaste sur une couche isolante de telle façon que cette couche en duroplaste ne soit pas ou seulement partiellement réticulée, dans lequel, à l'étape E, le collage des conducteurs partiels de la barre conductrice composée est effectué par la réticulation de ces couches en duroplaste des conducteurs partiels.

7. Procédé selon la revendication 6, **caractérisé en ce que** le duroplaste est une résine époxy ou un système mixte résine époxy/résine silicone.

8. Procédé au moins selon la revendication 4, **caractérisé en ce que** la poudre de plastique est chargée électrostatiquement pour l'étape C1.

9. Procédé selon l'une quelconque des revendications 1 à 8, **caractérisé en ce que** la barre conductrice est réalisée comme barre Roebel.

10. Procédé selon l'une quelconque des revendications 1 à 9, **caractérisé en ce que** la barre conductrice est réalisée comme conducteur de stator pour une machine électrique rotative, en particulier un générateur, ou pour un transformateur.

11. Procédé selon l'une quelconque des revendications 1 à 10, **caractérisé en ce que** les conducteurs partiels présentent une section transversale rectangulaire.
